# EUROPÄISCHE PATENTSCHRIFT

(11) **EP 3 125 056 B1**
(45) Veröffentlichungstag und Bekanntmachung des Hinweises auf die Patenterteilung: **07.04.2021**
(21) Anmeldenummer: 15179086.2
(22) Anmeldetag: 30.07.2015
(51) Int. Cl.: G05B 19/418, H04L 12/40, H04L 12/863, H04L 12/935

(54) **SYSTEM UND VERFAHREN ZUR STEUERUNG UND/ODER ANALYTIK EINES INDUSTRIELLEN PROZESSES**
SYSTEM AND METHOD FOR CONTROL AND/OR ANALYSIS OF AN INDUSTRIAL PROCESS
SYSTEME ET PROCEDE DE COMMANDE ET/OU D'ANALYSE D'UN PROCESSUS INDUSTRIEL

(43) Veröffentlichungstag der Anmeldung: 01.02.2017
(73) Patentinhaber: Siemens Aktiengesellschaft, 80333 München (DE)
(72) Erfinder: Verma, Amit, 15732 Eichwalde (DE)

(56) Entgegenhaltungen:
- EP-A2- 2 924 571
- US-A1- 2003 200 315
- US-A1- 2004 156 360
- US-A1- 2013 211 546

## Beschreibung

Die Erfindung betrifft ein System und ein Verfahren zur Steuerung und/oder Analytik eines industriellen Prozesses und insbesondere ein System und ein Verfahren für das Priorisieren der Datenübertragung von Prozessdaten von anlagenseitigen Automatisierungs- und Rechnereinheiten zu anlagenexternen Rechnereinheiten.

Eine Vielzahl von Anlagen, die eine Prozesssteuerung vornehmen, erfüllt in der Regel einfache automatisierungs- und regelungstechnische Aufgaben. Diese Aufgaben werden in der Regel von Automatisierungseinheiten durchgeführt, die Vor-Ort und damit in der Nähe des zu automatisierenden Prozesses installiert. Oft bestehen solche Anlagen dann auch aus einer Vielzahl meist auch räumlich getrennter, kleinerer Automatisierungseinheiten, was dann zur Folge hat, dass auch die einzelnen Prozessaufgaben verteilt ablaufen. Solche kleineren Automatisierungseinheiten sind aufgrund ihrer eingeschränkten Rechenleistung eher nicht in der Lage komplexe Regelungsstrukturen oder Regelungs- und/oder Simulationsstrategien abzubilden, wie sie in Automatisierungsgeräten der höheren Klassen möglich sind. Solche komplexeren Regelungsstrategien, die eine erhebliche Rechenkapazität benötigen können, können beispielsweise sogenannte modellprädiktive Regelungen (Model Predictive Control, MPC) sein, wie sie bevorzugt in verfahrenstechnischen Prozessen eingesetzt werden. Häufig besteht auch der Wunsch komplexe Regelungen einzurichten, die auf umfangreichen historischen Daten aufbauen und diese beispielsweise in sog. Support Vector Machines (SVM) zu nutzen, um auf dieser Basis Optimierungen am Prozess vornehmen zu können. Deshalb werden solche rechenintensiven verfahrenstechnische Prozesse oder Datenanalysemodelle häufig im übergeordneten Steuerungs-, und Überwachungssystem der Anlage automatisiert. Wir erleben aktuell einen Trend in Richtung zentraler Datenanalytik in externen Rechnereinheiten (sog. cloud based analytics). Mit diesen externen Rechnereinheiten können Prozesssteuerungen für eine industrielle Anlage Cloud-basiert durchgeführt werden kann, indem die Prozessdaten von einer Anlage gesammelt werden, um sie dann einer externen Recheneinheit zur Analyse bereitzustellen. Das Analyseergebnis wird zur Verbesserung der Prozesssteuerung und Prozessoptimierung an die Anlage zurückgesendet. Aufgrund seiner umfangreichen Analytikmethoden und der meist selbstlernenden Techniken erlaubt die Cloud-basierte Analytik eine wesentliche Verbesserung der Prozesssteuerungen. Allerdings sind die Cloud-basierten Ansätze oft nicht echtzeitfähig, weil eine Vielzahl von Daten von Sensoren oder Aktoren des industriellen Prozesses oder intern gebildeter Daten von der Anlage in die externe Recheneinheit übertragen werden müssen, um sie dort zu analysieren. Danach ist das Analyseergebnis für weitere Aktionen zurück zu senden, um in der Anlage prozesswirksam zu werden, was in Summe nicht akzeptable Zeitverluste bedeutet. Geschlossene Regelkreise sind - insbesondere dann, wenn wegen der Regelgeschwindigkeit verhältnismäßig schnelle Abtastraten notwendig werden - mit Cloud-basierten Methoden wegen der unsicheren zumindest aber wenig deterministischen Kommunikation problematisch. Die wesentlichen Quellen solche Zeitverluste liegen a) in der Datenakquisition, der -vorverarbeitung und - verdichtung, b) in der Übertragung von Daten in die Cloud und c) in der Analytik und Ergebnisberechnung selbst. Um das Problem der Latenzzeiten in Cloud basierten Systemen abzumildern, wird versucht die Datensammlung durch geeignete schnellere Hardware zu ermöglichen. Desweiteren wird vorgeschlagen die Daten einer Vorverarbeitung zu unterziehen, um dann nur eine reduzierte Datenmenge in das Cloud-basierte System zu übertragen. Einen weiteren Ansatzpunkt betrifft die Übertragung der Daten, indem versucht wird schneller Übertragungskanäle mit entsprechenden Bandbreiten bereitzustellen. Im Rahmen der Analytik selbst werden die Cloud-basierten Systeme mit high-end Rechnern ausgestattet, auf denen dann effiziente Algorithmen ablaufen sollen.

Es hat sich gezeigt, dass hohe Bandbreiten und geringe Wartezeiten allein oft nicht ausreichend sind. Dies gilt insbesondere dann, wenn kritische industrielle Prozesse und eine Vielzahl von zu übertragenden Daten involviert sind.

Aus der EP 2 924 571 A2 ein System zur Cloud-basierten Datenverarbeitung bekannt, mit welchem industrielle Daten in einer Cloud-Plattform gesammelt und verarbeitet werden können. Agents sammeln und vorverarbeiten Daten vor Ort in einer industriellen Anlage, wobei die Daten an die Cloud-Plattform übertragen werden und dort passend verarbeitet werden.

Aus der US 2013/0211546 A1 ist ein Gerät bekannt, welches mit einer Cloud-Plattform verbunden ist und innerhalb eines Automatisierungssystems angeordnet ist. Das Gerät ermittelt unter anderem seinen geographischen Standort, identifiziert andere Geräte innerhalb des Systems und seine Rolle innerhalb des Systems. Das Gerät stellt eine Kommunikationsverbindung mit der Cloud-Plattform her und übermittelt unter anderem sein Geräteprofil, welches gesammelten Informationen umfasst.

Es ist somit Aufgabe der Erfindung eine alternative Vorrichtung und ein alternatives Verfahren anzugeben, welche Cloud-basierte Prozesssteuerung und/oder -analytik im industriellen Umfeld deterministisch in Echtzeit unterstützt und systematisch die Latenzzeiten reduziert.

Die Aufgabe wird gelöst durch ein System mit den Merkmalen des Anspruchs 1 und ein Verfahren mit den Merkmalen des Anspruchs 12.

Danach weist das System zur Steuerung eines industriellen Prozesses anlagenseitig wenigstens eine Automatisierungs- oder Rechnereinheit auf. Bei der industriellen Anlage kann es sich um jedwede Anlage mit einem Produktions- oder Fertigungsprozess im industriellen Umfeld handeln. Anlagenseitig heißt, dass die Automatisierungs- oder Rechnereinheit Be standteil des originären Automatisierungssystems ist und in der Regel prozessnah angeordnet ist. Die Automatisierungseinheit führt eine Vielzahl erster Prozessgrößenberechnungen durch. Dazu ist die Automatisierungseinheit mittels Sensoren und Aktoren in den Prozess eingebunden. Prozesseingangsvariablen sind die Sensoren und Aktoren, die für die Steuerung des Pro-zesse vom Eingangsbaustein der Automatisierungseinheit in der Regel zyklisch eingelesen und zwischengespeichert wer-den und somit einer weiteren softwaretechnischen Verarbeitung durch die Prozessoren der Automatisierungskomponenten zur Verfügung stehen. Die konkrete softwaretechnische Verarbeitung innerhalb der Automatisierungseinheit erfolgt nach einem Prozesssteuerungs-Algorithmus. Die Ausgangsgrößen dieser Verarbeitung, d.h. die Ergebnisse des Prozesssteuerungs-Algorithmus der anlagenseitigen Automatisierungseinheit werden über einen Ausgangsbaustein der Automatisierungseinheit in der Regel ebenfalls zyklisch prozesswirksam. Die anlagenseitige Rechnereinheit kann aber auch ein MES (Manufacturing Execution Systems) oder ERP-System (Enterprise resource planning) sein. Solche MES oder ERP-Systeme besitzen einen weiten Funktionsumfang, wobei deren Funktionen ebenso auf den unterschiedlichsten Prozessdaten und Prozessgrößenberechnungen basieren. Auch die in diesen Systemen vorliegenden Zwischendaten, die einer weiteren Verarbeitung unterliegen sollen dem hier verwendeten Begriff der ersten Prozessgrößenberechnungen unterfallen. Während die Prozessgrößenberechnungen der Automatisierungseinheiten i.d.R direkt auf den industriellen Prozess einwirken (beispielsweise durch Sollwertvorgaben für einen Regler) wirken die Prozessgrößenberechnungen von MES oder ERP-Systemen eher indirekt auf den industriellen Prozess ein, indem das MES für das Terminieren von Produktionsprozessen verantwortlich zeigt beispielsweise durch die Bestimmung des Produktionsplanes durch Sammlung von Aufträgen, oder indem ein MES eine Überprüfung und das Management von Ressourcen ausführt, um die Produktion vorzubereiten oder Produktionsbestellungen mit den notwendigen materiellen Ressourcen durchzuführen und/oder andere System über den Fortschritt des Produktionsprozesses zu informieren. Oder ein Einwirken auf den Prozess erfolgt indirekt durch den Austausch von Prozessdaten, der Statusanalyse von Betriebseinrichtungsgegenständen, Materialverbrauchsinformationen oder historischen oder aktuellen Produktionsdaten.

Das System weist weiter wenigstens eine anlagenexterne Rechnereinheit auf, die zweite Prozessgrößenberechnungen durchführt und dazu über eine Datenverbindung lokale Daten von der anlagenseitigen Automatisierungs- oder Rechnereinheit erhält. Die Datenverbindung wird über bekannte Kommunikationsmechanismen und standardisierte Schnittstellen realisiert. Zu den Kommunikationsmechanismen gehören beispielsweise die Kommunikationsstandards OPC (OPC DA, OPC UA) oder TCP/IP (Profinet), die den Zusammenschluss unabhängiger Recheneinheiten zu einem verteilten System erlauben. Zu den Standard Schnittstellen RPC, OLEDDB oder SQL. Als anlagenextern soll eine Recheneinheit angesehen werden, wenn sie räumlich und/oder funktional außerhalb des originären Automatisierungssystems angesiedelt ist. Solche anlagenexternen Recheneinheiten können sich z.B. bei externen Serviceprovidern befinden und werden auch als Cloud-Recheneinheiten bezeichnet.

Die anlagenexterne Recheneinheit führt parallel oder zusätzlich zur Berechnung der ersten Prozessgrößenberechnungen der anlagenseitigen Automatisierungs- oder Recheneinheit zweite Prozessgrößenberechnungen durch. Im Allgemeinen werden diese zweiten Prozessgrößenberechnungen wesentlich komplexer sein und wesentlich höhere Rechenleistung verglichen mit der Rechenleistung innerhalb der lokalen Automatisierungs- oder Recheneinheit erfordern. Die komplexeren, zweiten Prozessgrößenberechnungen werden dabei in der Regel auch auf eine größere Menge von Daten fußen. Sofern diese Daten vom Prozess selbst bereitgestellt werden können (beispielsweise durch zusätzliche und bis dahin nicht genutzte Sensoren oder Aktoren), werden diese ebenfalls über die anlagenseitige Automatisierungseinheit eingelesen und bereitgestellt. Solche Daten können aber auch historische Daten oder Zwischendaten umfassen, wie sie beispielsweise innerhalb der anlagenseitigen Automatisierungs- oder Recheneinheit selbst vorliegen. Die Berechnungen, die in der anlagenexternen Recheneinheit durchgeführt werden, sind weit komplexer und rechenintensiver als diejenigen, die in der anlagenseitigen Automatisierungseinheit durchgeführt werden können. So übernimmt die externe Recheneinheit erweiterte regelungstechnische Funktionen, wie sie beispielsweise von MPC-Reglern bekannt sind. Weiterhin können auch Condition Monitoring Systeme, Simulationssysteme oder Historiensysteme innerhalb dieser Recheneinheit zusätzliche Auswertungen durchführen und zu diesem Zwecke auch auf die durch die Regelung verarbeiteten Signale zurückgreifen. Wegen der höheren Anzahl von Daten, insbesondere historischer Daten können die Prozesssteuerungs-Algorithmen beispielsweise auch sog. Support Vector Machines (SVM) basierten Model Predictive Control (MPC) Algorithmen umfassen.

Das System weist nun anlagenseitig wenigstens eine Datensammlereinheit auf, wobei die Datensammlereinheit den Datentransfer über die Datenverbindung zwischen der wenigstens einen Automatisierungs- oder Recheneinheit und der anlagenexternen Recheneinheit priorisiert. Der Datensammlereinheit liegt die Erkenntnis zugrunde, dass in Abhängigkeit der Aufgaben der anlagenexternen Recheneinheit die lokalen Daten nicht gleichrangig zur anlagenexternen Recheneinheit übertragen werden müssen. Zum einen können verschiedene innerhalb der anlagenexternen Recheneinheit zu lösende Analytik- oder Prozessführungsaufgaben schon unterschiedliche Anforderung an die Datenversorgung aus der anlagenseitigen Automatisierungs- oder Recheneinheit nach sich ziehen und dennoch parallel abgearbeitet werden, zum anderen sollen bestimmte Aufgaben in jedem Fall und in Echtzeit, insbesondere aber deterministisch wiederholbar durchführbar sein, während andere Aufgaben nachrangig ausgeführt werden können.

Die Datensammlereinheit weist einen Prioritätsdispatcher und einen Prioritätsspeicher auf. Der Prioritätsdispatcher hat dabei die Aufgabe, die lokalen Daten unterschiedlichen Prioritätsspeichern zuzuordnen, d.h. in diese Prioritätsspeicher physisch umzuspeichern. Alternativ wäre auch ein Priorisieren innerhalb des Datenpuffers möglich, beispielsweise durch die Vergabe eines Prioritätsflags. Das Priorisieren der lokalen Daten erfolgt in Abhängigkeit der Anforderungen an ihre Übertragungszeit in die anlagenexterne Recheneinheit. Der Prioritätsdispatcher hat das Wissen darüber, welches lokale Datum relativ bedeut-samer zu einem anderen lokalen Datum ist. Die Information darüber bezieht der Prioritätsdispatcher beispielhaft aus dem Datensatz das Datum selbst betreffend oder über eine Kategorisierung von Daten hinsichtlich ihrer Verwendung. Beispielsweise kann für lokale Daten, die für die Durchführung von vergleichsweise schnellen Regelungsalgorithmen benutzt werden, eine höher wertige Kategorisierung hinterlegt sein als für Daten, die beispielsweise für ein Condition Monitoring benutzt werden sollen. Auf diese Weise erfolgt eine Aufteilung der Daten in verschiedene Pufferbereiche und für die Daten mit der höchsten Prioritätsstufe können die Übertragungen zielgerichtet erfolgen. Umgekehrt könnten die Daten mit der niedrigsten Priorität gar nicht übertragen werden, nämlich dann wenn diese wegen der Übertragung der höherprioren Daten etwa zeitlich nicht mehr möglich ist. Der Prioritätsspeicher mit der höchsten Priorität wird zuerst an die anlagenexterne Recheneinheit übertragen, erst wenn dieser vollständig übertragen worden ist, werden die Daten des Prioritätsspeichers mit der nächst niedrigen Priorität übertragen u.s.w. Für den Fall, dass zwischenzeitlich wieder neue Daten aus dem Datenpuffer in einen oder mehreren höherprioren Prioritätsspeichern geladen worden sind, wird die Übertragung der Daten aus dem Prioritätsspeicher mit niedrigerer Priorität ausgesetzt und die Daten aus dem höherprioren Speichern werden übertragen, wobei mit dem höchstprioren Speicherinhalt begonnen wird. Erst dann wird die vorher ausgesetzte Übertragung erneut wieder aufgenommen. Die Prioritätsspeicher können in der Form eines FIFO (first in first out) Speichers oder in Form eines zyklischen Speichers realisiert sein.

In Fortbildung der Erfindung weist die Datensammlereinheit einen Datenpuffer zur Zwischenspeicherung der lokalen Daten auf. Der Datenpuffer speichert alle an die anlagenexterne Recheneinheit zu kommunizierenden lokalen Daten und stellt sie so dem Priorisieren zur Verfügung.

Neben dem Datenpuffer kann der Datensammler auch einen Baustein zur Vorverarbeitung der lokalen Daten beinhalten. Auf diese Weise kann beispielsweise schon eine Vorverdichtung der Data durchgeführt werden.

Der Prioritätsspeicher kann vom Prioritätsdispatcher dynamisch konfiguriert werden. D.h. der Prioritätsdispatcher kann die Anzahl der Prioritätsspeicher dynamisch festlegen und auf diese Weise sicherstellen, dass ein sinnvolles Priorisieren der Datenübertragung stattfindet. Der Prioritätsdispatcher kann die Prioritätsspeicher erzeugen oder nicht notwendige Prioritätsspeicher auflösen.

Nach einem weiteren Aspekt der Erfindung weist die Datensammlereinheit ein Überwachungsmodul für die Übertragungsgeschwindigkeit der Kommunikationsverbindung zur anlagenexternen Recheneinheit auf. Vorteilhaft kann auf diese Weise bestimmt werden, ob die prioritätsgesteuerte Datenübertragung und die Festlegung der Anzahl der Prioritätsspeicher und die Abstufung der verschiedenen Prioritätsspeicher mit den zu übertragenen Datenmengen korreliert. Beispielsweise könnte eine hohe Übertragungsrate die Anzahl der Prioritätsspeicher verringern und die Prioritätssprünge zwischen den verschiedenen Speichern (Abstufung) erhöhen, während eine niedrigere Übertragungsrate die Anzahl und/oder die Granularität ihrer Abstufung erhöhen könnte.

In einer Ausführungsform wird das Überwachungsmodul den Prioritätsdispatcher hinsichtlich der verfügbaren Übertragungsgeschwindigkeit aktualisieren. Auf diese Weise kann dieser die Festlegungen hinsichtlich Anzahl und Abstufung der Prioritätsspeicher treffen.

Alternativ oder zusätzlich kann auf der Grundlage der verfügbaren Übertragungsgeschwindigkeit auch die Zuordnung lokaler Daten zu den Prioritätsspeichern vorgenommen werden. Auf diese Weise würden beispielsweise Daten einer eigentlich niedrigeren Priorität einem Prioritätsspeicher höherer Prioritätsordnung zugeordnet, wenn die eine vergleichsweise höhere Übertragungsgeschwindigkeit zur Verfügung steht.

Nach einem weiteren Aspekt ist der Prioritätsdispatcher derart konfigurierbar, dass er statisch oder dynamisch die Anforderungen an die Übertragungszeit bestimmt. Die Anforderung an die Übertragungszeit und damit die Festlegung der Priorität bestimmt sich wiederum aus der Bedeutung der zu übertragenden lokalen Daten. Die Priorität der Daten kann abhängen von dem Anwendungsfall der Analytik oder der Prozesssteuerung. So können beispielsweise Daten, die Stromaufnahme einer Maschine beinhalten, in einem hochprioren Prioritätsspeicher abgelegt werden, während beispielsweise Daten über die Vibration der Maschine in einem Speicher vergleichsweise niedrigerer Priorität zugeordnet werden können. Oder es kann konfiguriert werden, dass Prozessdaten geringerer Auflösung und damit auch geringerem Datenvolumen in einem hochprioren Speicher gespeichert werden, während Prozessdaten mit hoher Auflösung und damit auch höherem Datenvolumen in einen Speicher mit vergleichsweise niedrigerer Priorität. Auf diese Weise ist das System vorteilhaft in der Lage auf das anfallende Datenvolumen zu reagieren und sicherzustellen, dass wichtige Daten mit geringer Latenzzeit in der anlagenexternen Recheneinheit verarbeitet werden und damit Berechnungsergebnisse aus der anlagenexternen Recheneinheit rechtzeitig prozesswirksam werden können.

In einer alternativen Ausführungsform kann beispielsweise schon die Zwischenspeicherung der Daten im Datenpuffer der Datensammlereinheit durch den Prioritätsdispatcher erfolgen. Typischer Weise erfolgt die Datensammlung im Datenpuffer auf Basis von API (application programming interface) Aufrufe, denen dann der eigentliche Datenverkehr folgt. Diese API Aufrufe können durch den Prioritätsdispatcher erfolgen. Falls Daten entweder während der Laufzeit des Systems dynamisch oder durch Bedienereingriff manuell als weniger relevant und damit niederprior eingestuft werden, kann sichergestellt werden, dass diese Daten erst gar nicht in dem Datenpuffer zwischengespeichert werden.

Die Aufgabe wird ferner gelöst durch ein Verfahren zur Übertragung von lokalen Daten eines industriellen Prozesses von wenigstens einer anlagenseitigen Automatisierungs- oder Rechnereinheit an eine anlagenexterne Recheneinheit mittels einer anlagenseitigen Datensammlereinheit. Die lokalen Daten können Prozessdaten, historische Daten, Zwischendaten usw. sein. Unter einer anlagenseitigen Datensammlereinheit soll ein softwarebasierter Datensammler aufgebaut aus eigener Hardware oder integriert als Softwaremodul in der wenigstens einen Automatisierungs- oder Recheneinheit verstanden werden, der kommunikationstechnisch mit der wenigstens einen anlagenseitigen Automatisierungs- oder Rechnereinheit verbunden ist. In einem ersten Schritt umfassend das Verfahren die Sammlung der lokalen Daten von der wenigstens einen anlagenseitigen Automatisierungs- oder Rechnereinheit in einem Datenpuffer. In einem nachfolgenden Schritt werden die lokalen gepufferten Daten durch einen Prioritätsdispatcher ausgelesen und in Prioritätsspeichern unterschiedlicher Prioritätsordnung eingetragen, wobei die Eintragung in Abhängigkeit der Anforderungen an ihre Übertragungszeit zur anlagenexternen Recheneinheit erfolgt. D.h. der Prioritätsdispatcher nimmt die Daten aus dem Datenpuffer und reiht sie in einen der Prioritätsspeicher ein, die unterschiedliche Prioritätsordnung aufweisen. Ein sich daran anschließender Verfahrensschritt sendet die im Prioritätsspeicher erster Prioritätsordnung gespeicherten Daten an die anlagenexterne Recheneinheit. Der Prioritätsspeicher erster Prioritätsordnung ist dabei der Speicher, der die Daten höchster Priorität beinhaltet. Damit ist gewährleistet, dass die hochprioren industriellen Daten in einen hoch prioren Puffer verbracht werden, die dann für eine Datenübertragung bevorzugt bedient wird. Der Analytikbaustein innerhalb der anlagenexternen Recheneinheit muss nicht auf die gesamte Datenmenge warten, bevor es mit der Analyse der Daten beginnt. Wenn immer Ergebnisse, auch Teilergebnisse, auf Basis der hochprioren Daten verfügbar sind, werden diese schnell an den Prozess zurückgesandt, was in Summe zu einer deutlichen Verkürzung von Lazenzzeiten im System führt. Das Verfahren ist damit die Basis für Echtzeit Operationen auf Basis von industriellen Daten in cloudbasierten Analytikanwendungen.

Nach einem weiteren Aspekt der Erfindung werden die in den Prioritätsspeichern der Prioritätsordnung 2, 3, 4 bis x gespeicherten Daten jeweils nach erfolgtem Versand der in den Prioritätsspeichern der Prioritätsordnung x-1 gespeicherten Daten gesendet werden. D.h. nachdem die Daten aus dem Prioritätsspeicher der Prioritätsordnung 1 vollständig an die anlagenexterne Recheneinheit versandt worden sind, werden die Daten des Prioritätsspeichers der Ordnung 2 versendet und nach dessen vollständigem Versand die Daten der Prioritätsspeicher der Ordnung 3 usw.

Das Verfahren kann beinhalten, dass die Daten aus Prioritätsspeichern niedrigerer Ordnung nicht versendet werden, nämlich dann wenn beispielsweise erkennbar ist, dass nicht alle lokalen Daten innerhalb eines definierten Zeitfensters an die anlagenexterne Recheneinheit übertragbar sind. In diesem Fall könnte auf die Übertragung von Daten niedriger Priorität zugunsten der Daten höherer Priorität ganz verzichtet und der entsprechende Speicher freigeräumt werden.

Nach einem wichtigen Aspekt wird das Senden von Daten aus Prioritätsspeichern der Prioritätsordnungen x ausgesetzt, sofern Daten zwischenzeitlich in Prioritätsspeichern der Prioritätsordnungen x-1 eingetragen wurden. Mit anderen Worten wird beispielsweise während des Sendens von Daten aus dem Speicher der Ordnung 2 über den Prioritätsdispatcher der Prioritätsspeicher der Ordnung 1 wieder mit einem oder mehreren Daten hochprioren Daten gefüllt, so wird das Senden der Daten des Speichers der Ordnung 2 unterbrochen und die Daten des Speichers der Ordnung 1 versendet.

Nach einem weiteren Aspekt wird die Aussetzung des Sendens von Daten beendet, sofern die zwischenzeitlich eingetragenen Daten gesendet wurden. D.h. nach vollständigem Versand dieser Data wird das Senden der Daten des Speichers der Ordnung 2 wieder begonnen. Nachdem diese gesendet wurden, werden die Daten des Speichers der Ordnung 3 gesendet usw. Auf diese Weise ist sichergestellt, dass die hoch oder höher prioren Daten verzögerungsfrei oder zumindest verzögerungsarm übertragen werden.

In Fortbildung der Erfindung wird der Prioritätsspeicher durch den Prioritätsdispatcher dynamisch erzeugt. Damit ist der Prioritätsdispatcher in der Lage entsprechend dem Datenvolumen und der Verteilung der Daten hinsichtlich ihrer Priorität und damit der notwendigen Übertragungszeit festzulegen.

Wenn die Datensammlereinheit die Übertragungsgeschwindigkeit der Kommunikationsverbindung zur anlagenexternen Recheneinheit überwacht und den Prioritätsdispatcher hinsichtlich der verfügbaren Übertragungsgeschwindigkeit aktualisiert, so kann vorteilhaft beispielsweise eine dynamische Erzeugung der Prioritätsspeicher auch aufgrund der Übertragungsgeschwindigkeit erfolgen. Auf diese Weise kann das Übertragungsverhalten weiter optimiert werden, unter Beibehaltung der Prämisse, dass die Latenzzeit verkürzt wird.

Alternativ soll der Prioritätsdispatcher auf der Grundlage der verfügbaren Übertragungsgeschwindigkeit die Eintragung der gepufferten lokalen Daten zu den Prioritätsspeichern vornehmen. D.h. bei einer größeren Übertragungsgeschwindigkeit könnte sich beispielsweise die Anzahl der höherprioren Daten, die dem Speicher der Ordnung 1 zugeordnet werden höher ausfallen, die Entscheidungskriterien für eine Abstufung der zuzuordnenden Prioritäten könnte sich dynamisch ändern.

Die oben beschriebenen Eigenschaften, Merkmale, Vorteile dieser Erfindung sowie die Art und Weise, wie diese erreicht werden, werden in Verbindung mit den Figuren näher erläutert. Hierbei zeigen in schematischer Darstellung:
- Fig. 1: ein System für eine verteilte Prozesssteuerung einer industriellen Anlage mit zentraler Datensammlereinheit
- Fig. 2: die schematische Darstellung der Datensammlereinheit.

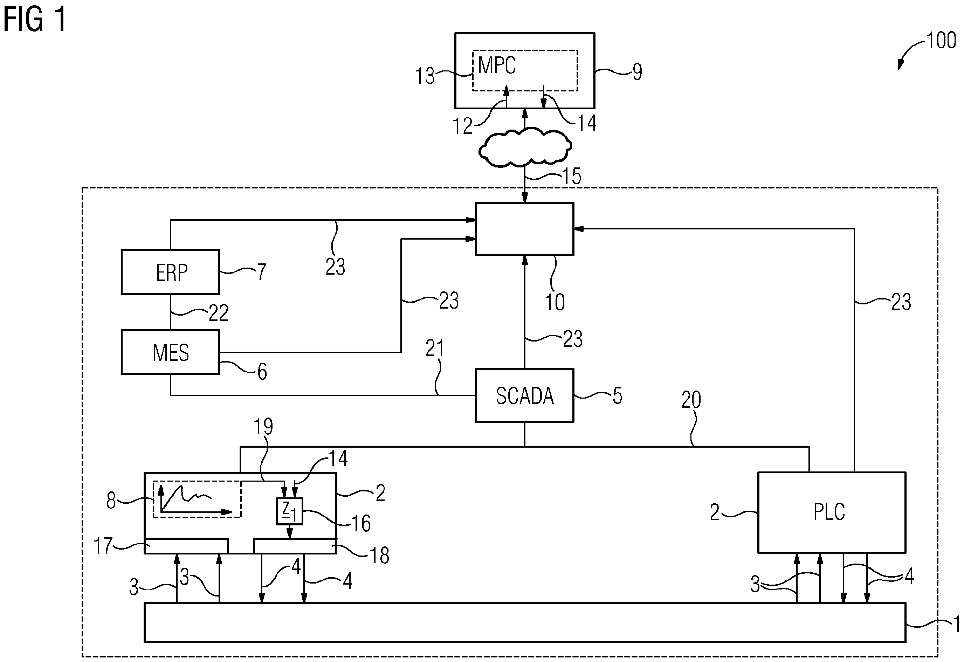

Fig.1 zeigt ein System 100 zur Steuerung des industriellen Prozesses 1, beispielsweise einen Prozess zur Wasseraufbereitung in einer Kläranlage oder einen beliebigen Fertigungsprozess in der verarbeitenden Industrie. Der industrielle Prozess kann ein Prozess sein, der innerhalb eines Standortes abläuft, oder aber über mehrere Standorte hinweg. Der Prozess 1 wird gesteuert und geregelt über dezentrale, anlagenseitige Automatisierungseinheiten 2. Diese sind mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung und Regelung des Prozesses sowie auf die Daten-Kommunikation zwischen den Einheiten. Die Automatisierungseinheit 2 weisen zur Steuerung und Regelung des Prozesses eine Reihe von Wirkverbindungen 3 zu in Figur 1 nicht näher dargestellten Sensoren oder Aktoren aufweisen. Über diese Verbindung liest der Eingangsbaustein 17 die lokalen Daten ein, die danach in einem Speicherbereich der Automatisierungseinheit vorliegen. Über die Wirkverbindungen 4 werden Steuerkommandos vom Ausgabebaustein 18 zu in Figur 1 nicht näher dargestellten Aktoren des Prozesses realisiert. Beispielhaft sind zwei Automatisierungseinheiten 2 gezeigt, in der Praxis werden mehrere Automatisierungseinheiten den Prozess steuern, regeln und überwachen. Über eine Datenverbindung 20 sind die Automatisierungseinheiten 2 mit dem Überwachungssystem 5 verbunden, welches die Steuerung und Überwachung des Prozesses 1 übernimmt. Das Überwachungssystem 5 unterhält eine Datenverbindung 21 zu dem Manufacturing Execution System 6 welches wiederum eine Datenverbindung 22 zum einem Enterprise Resource Planning-System 7 unterhält. Die Automatisierungseinheiten 2 führen auf Basis der über Wirkverbindung 3 generierten lokalen Daten Prozesssteuerungs-Algorithmen 8 aus. Das sind prozesswirksame Überwachungsanalysen und Regelungsfunktionen, die i.d.R. einfachere und weniger komplexe Analyse- und Regelungsaufgaben beinhalten. Das Ergebnis dieses Prozesssteuerungs-Algorithmus wird als Prozessgrößenberechnung 19 in der Automatisierungseinheit 2 zur weiteren Verwendung vorgehalten und soweit nicht benötigt in einem nächsten Zyklus überschrieben. Die Prozessgrößenberechnung 19 werden aber ebenso durch Berechnungen innerhalb der übergeordneten Systeme 5, 6, 7 beeinflusst. So können beispielsweise Planungsvorgaben basierend auf Kundenbestellungen oder Materiallieferungen aus MES und ERP-System dazu führen, dass bestimmte Fertigungsprozesse langsamer, energieoptimierter oder schneller ausgeführt werden sollen. Das SCADA kann beispielsweise aufgrund von Störungen an andere Stelle des Fertigungsprozesses (beispielsweise der Verpackungsabteilung) einen vorgelagerten Fertigungsprozess (beispielsweise die Abfüllung) ebenfalls beeinflussen.

In dieser Konfiguration ist das System 100 funktionsfähig und kann seine Steuer-, Regelungs- und Überwachungsaufgaben erfüllen.

Das System 100 ist erweitert durch eine anlagenexterne Recheneinheit 9. Diese ist mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung, Regelung und Analytik des Prozesses sowie auf die Daten-Kommunikation zwischen den Einheiten. Die Recheneinheit 9 ist über eine Datenverbindung 15 mit einer anlagenseitigen Datensammlereinheit 10 verbunden. Die Datenverbindung 15 wird bevorzugt über das Internet entweder kabelgebunden oder drahtlos realisiert. Die Datensammlereinheit 10 erhält von den Automatisierungs- und Rechnereinheiten 2, 5, 6, 7 über die Datenverbindung 23 alle lokale Daten, die in der Recheneinheit 9 für die dort ablaufenden vorgenannten Prozessteuerungs-Algorithmen zur Steuerung, Regelung und Analytik des Prozesses 1 notwendig sind. Die gezeigte Datenverbindung 23 ist funktional zu verstehen, physisch kann diese ein eigenes Netzwerkt sein, oder es wird die Datensammlereinheit 10 auf ein bestehendes Netzwerk innerhalb des Systems 100, beispielsweise 20, 21 aufgeschaltet. Die anlagenexterne Recheneinheit 9 führt auf Basis von Eingangsprozessvariablen 12, die von der Datensammlereinheit 10 bereitgestellt und priorisiert werden und die im wesentlichen basieren auf die über die Wirkverbindung 3 generierten Daten Prozesssteuerungs-Algorithmen 13 durch und gibt Ergebnisse 14 dieser Berechnungen aus. Die Eingangsprozessvariablen 12 können ebenso basieren auf den historischen Daten, die in der Automatisierungseinheit 2 vorliegen. Alternativ oder zusätzlich können die Eingangsprozessvariablen 12 auf historischen Daten, die in der Recheneinheit 9 selbst vorliegen basieren. Beispielhaft stellt Fig. 1 als Prozesssteuerungs-Algorithmus 13 eine MPC Regelstruktur dar. Aber auch umfangreichere Datenanalytik kann Gegenstand des vorgenannten Algorithmus sein. Die Ergebnisse 14 des Prozesssteuerungs-Algorithmus 13 werden an die die Automatisierungs- und Rechnereinheiten 2, 5, 6, 7 übertragen. Dazu kann der Kommunikationspfad über die Datensammlereinheit 10 benutzt werden oder es wird alternativ ein hier nicht dargestellter separater Kommunikationspfad genutzt. Innerhalb der Automatisierungseinheit 2 kann der Überprüfungsbaustein 16 darüber entscheiden, ob die Ergebnisse 14 über den Ausgabebaustein 18 prozesswirksam werden.

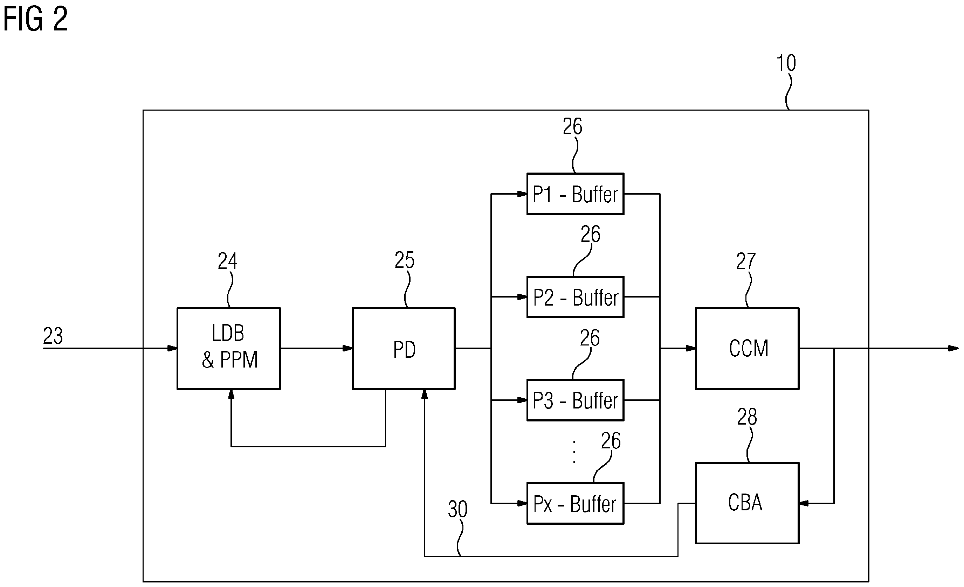

Fig. 2 zeigt schematisch den Aufbau der Datensammlereinheit 10. Bei der Datensammlereinheit 10 handelt es sich um eine eigene Rechnerhardware, die mit einem oder mehreren hier nicht dargestellten Prozessoren ausgestattet und die in Zusammenwirken mit den notwendigen Zwischenspeichern die in Softwarecode hinterlegten Befehlsanweisungen abarbeiten. Alternativ kann die Datensammlereinheit 10 aber auch als Softwaremodul auf einem der anlagenseigen Rechnereinheiten 5, 6, 7 bevorzugt innerhalb der SCADA Rechnereinheit 5 ablaufen. Über die Datenverbindung 23 erhält die Datensammeleinheit 10 die lokalen Daten, welche für die weiteren Analytik- oder Prozessführungsaufgaben in der anlagenexternen Recheneinheit 9 benötigt werden. Diese Daten werden innerhalb des Datenpuffers (Local Data buffer) 24 gespeichert. Der Datenpuffer sammelt die Daten aus verschiedenen Quellen ein. Dabei kann er statische, d.h. vorher festgelegte Regeln bei der Frage, welche Daten von welcher Quelle einzusammeln sind, befolgen. Dabei benutzt er standardisierte Schnittstellen (z.B. RPC, OLEDB, OPC, SQL). Standardmäßig werden sämtliche lokale Daten dort zwischengespeichert. Ein Vorverarbeitungsmodul (Preprocessing-module)führt gegebenenfalls eine Vorverarbeitung der Daten durch. Eine solche Vorverarbeitung könnte die Auswahl von Daten und damit eine Komprimierung von Daten beinhalten.

Der Prioritätsdispatcher (priority dispatcher) 25 liest die Daten aus dem Datenpuffer 24 und transferiert diese in einen der verschiedenen Prioritätsspeicher 26 (P1-Px). Der Prioritätsdispatcher 25 hat Kenntnis darüber, welches Datum relativ zu einem anderen Datum bedeutender für die Verarbeitung innerhalb der anlagenexternen Recheneinheit 9 ist. Bedeutendere Daten erhalten eine höhere Priorität und werden somit in einen Prioritätsspeicher höhere Prioritätsordnung (z.B. P1) transferiert. Der Prioritätsdispatcher 25 kann konfiguriert werden, ob die Bestimmung der Bedeutung eines Datums und damit seiner Priorität statisch oder dynamisch erfolgen soll. Beispielsweise kann die Priorität sich nach dem konkreten Fall der Prozesssteuerung bestimmen, wo z.B. Daten in Zusammenhang mit MCP Reglerstrukturen grundsätzlich mit hoher Priorität behandelt werden sollen. Oder die Priorität bestimmt sich nach dem Analytikfall. So kann der Prioritätsdispatcher beispielsweise konfiguriert sein, Stromdaten einer elektrischen Maschine höher prior zu bewerten und in den Prioritätsspeicher P1 zu transferieren, während Vibrationsdaten der gleichen elektrischen Maschine in den Prioritätsspeicher P2 transferiert werden. Er kann aber auch konfiguriert sein, Daten mit niedrigerer Auflösung (kleines Datenvolumen) in den Speicher P1 zu transferieren, während Daten mit hoher Auflösung (großes Datenvolumen) in einen Speicher niedrigerer Prioritätsordnung zu transferieren sind.

Die Prioritätsspeicher P1 bis Px sind in Form eines FIFO (firt in first out) oder in Form eines zyklischen Puffers implementiert.

Im Ergebnis enthalten die Prioritätsspeicher P1 bis Px die lokalen Daten, die für die Recheneinheit 9 notwendig sind, geordnet nach der Priorität. Das Cloud Kommunikationsmodul 27 (cloud communication module) sendet die Daten zur anlagenexternen Recheneinheit 9 unter Beachtung der zugeordneten Priorität. Der Prioritätsspeicher P1 wird zuerst übertragen, dann folgen der Reihe nach die Prioritätsspeicher der folgenden Ordnungen. Ordnet beispielsweise der Prioritätsdispatcher 25 ein Datum dem Speicher P1 zu, wobei das Cloud-Kommunikationsmodul 27 noch Daten aus dem Speicher P3 überträgt, wird diese Übertragung vorläufig beendet, um das Datum aus P1 zu übertragen. Mit erfolgter Übertragung dieses Datums wird die Übertragung der Daten aus dem Speicher P3 fortgesetzt. Der Kommunikation-Bandbreiten-Analysator 28 (communication bandwidth analyser)überwacht die verfügbare Bandbreite (Datendurchsatz) bei der Übertragung zur anlagenexternen Recheneinheit und stellt diese Information dem Prioritätsdispatcher 25 über die Verbindung 30 zur Verfügung, der aufgrund dieser Information beispielsweise das Priorisieren der Daten und damit die Zuordnung zu den Speicher P1-Px anpasst, oder der aufgrund dieser Information Prioritätsspeicher dynamisch erstellt oder löscht. Zusätzlich kann der Prioritätsdispatcher über die Wirkverbindung 31 auch das Modul 24 benachrichtigen und anweisen ausgewählte Daten nicht zu speichern, sondern über seine Vorverarbeitung auszusortieren.

Das vorbeschriebenes Schema soll an Hand des folgenden Beispiels noch konkreter beschrieben werden. Betrachtet man eine Regelabweichung von einem Sollwert über die Zeit für einen industriellen Prozess, so ist diese Sollwertabweichung der Schlüsselparameter für den Regelungsalgorithmus. Die Abweichung ist eine Funktion der Zeit und wird über die Wirkverbindung 3 vom Prozess zyklisch und damit mit einer gewissen Auflösung eingelesen. Je höher die Auflösung, desto besser können die Prozessgrößenberechnungen erfolgen. Für kurze Antwortzeiten ist es wichtig, dass die Prozessgrößenberechnungen aber innerhalb einer definierten kurzen Zeit erfolgen (Echtzeit). Die Analytikmodule, die in der anlagenexternen Recheneinheit laufen können deshalb nicht auf die gesamten Datensatz in voller Auflösung warten, um die Prozessgrößen zu berechnen. In diesem Fall wird also der Prioritätsdispatcher 25 vom Datenpuffer 24 die lokalen Daten innerhalb einer bestimmten Zeit in voller Auflösung erhalten. Der Prioritätsdispatcher 25 tastet die Seriendaten ab und ordnet beispielsweise jedes 5. Datum (Datum N%5) dem Prioritätsspeicher 1 zu, während jedes dritte Zwischendatum (Datum N%5+3) im Prioritätsspeicher 2 platziert wird. Alle weiteren Zwischendaten (Data N%5+1, N%5+2, N%5+4) werden in Speicher 3 zwischen gespeichert. Speicher 1 wird sodann an die anlagenexterne Recheneinheit 9 übertragen. Auf diese Weise erhält das Analytikmodul 13 für die Prozessgrößenberechnung 14 in der anlagenexternen Recheneinheit 9 zunächst die niedrig aufgelösten Daten 12, startet aber mit der Berechnung 13 sofort. Sofern die Daten aus den Speichern 2 und 3 ohne große Verzögerung nachfolgend transferiert werden können, erfolgt die Berücksichtigung in der Berechnung 13. Für den Fall, dass sie nicht innerhalb der geforderten Latenzzeit transferiert werden können, fußt die Berechnung 13 der Prozessgrößen ausschließlich auf den Daten niedrigerer Auflösung. In jedem Falle aber ist sichergestellt, dass Analytikergebnisse 14 für den Prozess 1 zur Verfügung stehen.

## Patentansprüche

1. System (100) zur Steuerung und/oder Analytik eines industriellen Prozesses (1), aufweisend anlagenseitig wenigstens eine Automatisierungs- oder Rechnereinheit (2, 5, 6, 7), die erste Prozessgrößenberechnungen durchführt und auf den Prozess (1) einwirkt, aufweisend anlagenextern eine Recheneinheit (9), die eine Anzahl zweiter Prozessgrößenberechnungen durchführt und die über eine Datenverbindung (15) lokale Daten (3) von der wenigstens einen Automatisierungs- oder Rechnereinheit (2, 5, 6, 7) erhält, **dadurch gekennzeichnet, dass** das System anlagenseitig wenigstens eine Datensammlereinheit (10) aufweist, wobei die Datensammlereinheit (10) den Datentransfer über die Datenverbindung (15) zwischen der wenigstens einen Automatisierungs- oder Rechnereinheit (2, 5, 6, 7) und der anlagenexternen Recheneinheit (9) priorisiert, **dadurch gekennzeichnet, dass** die Datensammlereinheit (10) einen Prioritätsdispatcher (25) und zumindest einen Prioritätsspeicher (26) aufweist, wobei der Prioritätsdispatcher (25) die lokalen Daten (3) in Abhängigkeit der Anforderung an ihre Übertragungszeit unterschiedlichen Prioritätsspeichern (26) zuordnet oder wobei der Prioritätsdispatcher (25) die lokalen Daten (3) in Abhängigkeit der Anforderung an ihre Übertragungszeit innerhalb des zumindest einen Prioritätsspeichers (26) priorisiert.

2. System nach Anspruch 1 **dadurch gekennzeichnet, dass** die Datensammlereinheit (10) einen Datenpuffer (24) zur Zwischenspeicherung der lokalen Daten (3) aufweist.

3. System nach Anspruch 1 oder 2, **dadurch gekennzeichnet, dass** die Datensammlereinheit (10) einen Baustein zur Vorverarbeitung der lokalen Daten (3) aufweist.

4. System nach einem der vorhergehenden Ansprüche, **dadurch gekennzeichnet, dass** Daten in Prioritätsspeichern (26) niedriger Priorität nicht übertragen werden.

5. System nach einem der vorhergehenden Ansprüche, **dadurch gekennzeichnet, dass** der Prioritätsdispatcher (25) Prioritätsspeicher (26) dynamisch erzeugt.

6. System nach einem der vorhergehenden Ansprüche, **dadurch gekennzeichnet, dass** die Datensammlereinheit (10) ein Überwachungsmodul (28) für die Übertragungsgeschwindigkeit der Kommunikationsverbindung zur anlagenexternen Recheneinheit (9) aufweist.

7. System nach Anspruch 6, **dadurch gekennzeichnet, dass** das Überwachungsmodul (28) den Prioritätsdispatcher (25) hinsichtlich der verfügbaren Übertragungsgeschwindigkeit aktualisiert.

8. System nach Anspruch 7, **dadurch gekennzeichnet, dass** der Prioritätsdispatcher (25) auf der Grundlage der verfügbaren Übertragungsgeschwindigkeit die Zuordnung lokaler Daten (3) zu den Prioritätsspeichern (26) vornimmt.

9. System nach einem der vorhergehenden Ansprüche, **dadurch gekennzeichnet, dass** der Prioritätsdispatcher (25) konfigurierbar ist, um statisch oder dynamisch die Anforderungen an die Übertragungszeit zu bestimmen.

10. System nach Anspruch 2, **dadurch gekennzeichnet, dass** die Zwischenspeicherung lokaler Daten (3) im Datenpuffer (24) in Abhängigkeit eines Befehls vom Prioritätsdispatcher (25) an den Datenpuffer (24) erfolgt.

11. Verfahren zur Übertragung von lokalen Daten (3) eines industriellen Prozesses (1) von wenigstens einer anlagenseitigen Automatisierungs- oder Rechnereinheit (2, 5, 6, 7) an eine anlagenexterne Rechnereinheit (9) mittels einer anlagenseitigen Datensammlereinheit (10) umfassend die Schritte:
a) Sammlung der lokalen Daten (3) von der wenigstens einen anlagenseitigen Automatisierungs- oder Rechnereinheit (2, 5, 6, 7) in einem Datenpuffer (24);
b) Auslesen der lokalen gepufferten Daten durch einen Prioritätsdispatcher (25);
c) Senden der im Prioritätsspeicher erster Prioritätsordnung gespeicherten Daten an die anlagenexterne Recheneinheit;
**dadurch gekennzeichnet, dass**
der Prioritätsdispatcher (25) die lokalen Daten (3) in Abhängigkeit der Anforderung an ihre Übertragungszeit unterschiedlichen Prioritätsspeichern (26) zuordnet oder der Prioritätsdispatcher (25) die lokalen Daten (3) in Abhängigkeit der Anforderung an ihre Übertragungszeit innerhalb des zumindest einen Prioritätsspeichers (26) priorisiert.

12. Verfahren nach Anspruch 11, **dadurch gekennzeichnet, dass** die in den Prioritätsspeichern (26) der Prioritätsordnung 2, 3 bis x gespeicherten Daten jeweils nach erfolgtem Versand der in den Prioritätsspeichern der Prioritätsordnung x-1 gespeicherten Daten gesendet werden.

13. Verfahren nach Anspruch 12, **dadurch gekennzeichnet, dass** Prioritätsspeichern (26) niedrigerer Prioritätsordnung nicht versendet werden.

14. Verfahren nach Anspruch 12, **dadurch gekennzeichnet, dass** das Senden von Daten aus Prioritätsspeichern (26) der Prioritätsordnungen x ausgesetzt wird, sofern Daten zwischenzeitlich in Prioritätsspeichern (26) der Prioritätsordnungen x-1 eingetragen wurden.

15. Verfahren nach Anspruch 14, **dadurch gekennzeichnet, dass** die Aussetzung des Sendens von Daten beendet wird, sofern die zwischenzeitlich eingetragenen Daten gesendet wurden.

16. Verfahren nach Anspruch 11 **dadurch gekennzeichnet, dass** der Prioritätsdispatcher die Prioritätsspeicher dynamisch erzeugt.

17. Verfahren nach Anspruch 11, **dadurch gekennzeichnet, dass** die Datensammlereinheit die Übertragungsgeschwindigkeit der Kommunikationsverbindung zur anlagenexternen Recheneinheit überwacht und den Prioritätsdispatcher hinsichtlich der verfügbaren Übertragungsgeschwindigkeit aktualisiert.

18. Verfahren nach Anspruch 17, **dadurch gekennzeichnet, dass** der Prioritätsdispatcher auf der Grundlage der verfügbaren Übertragungsgeschwindigkeit die Eintragung der gepufferten lokaler Daten zu den Prioritätsspeichern vornimmt.

## Claims

1. System (100) for controlling and/or analysing an industrial process (1), having, in the installation, at least one automation or computer unit (2, 5, 6, 7) which carries out first process variable calculations and acts on the process (1), having, outside the installation, a computing unit (9) which carries out a number of second process variable calculations and receives local data (3) from the at least one automation or computer unit (2, 5, 6, 7) via a data connection (15), **characterized in that** the system has, in the installation, at least one data collector unit (10), wherein the data collector unit (10) prioritizes the transfer of data between the at least one automation or computer unit (2, 5, 6, 7) and the computing unit (9) outside the installation via the data connection (15),
**characterized in that**
the data collector unit (10) has a priority dispatcher (25) and at least one priority memory (26), wherein the priority dispatcher (25) assigns the local data (3) to different priority memories (26) depending on the requirement imposed on their transmission time, or wherein the priority dispatcher (25) prioritizes the local data (3) depending on the requirement imposed on their transmission time within the at least one priority memory (26).

2. System according to Claim 1, **characterized in that** the data collector unit (10) has a data buffer (24) for buffering the local data (3).

3. System according to Claim 1 or 2, **characterized in that** the data collector unit (10) has a module for preprocessing the local data (3).

4. System according to one of the preceding claims, **characterized in that** data in low-priority priority memories (26) are not transmitted.

5. System according to one of the preceding claims, **characterized in that** the priority dispatcher (25) dynamically generates priority memories (26).

6. System according to one of the preceding claims, **characterized in that** the data collector unit (10) has a monitoring module (28) for the transmission speed of the communication connection to the computing unit (9) outside the installation.

7. System according to Claim 6, **characterized in that** the monitoring module (28) updates the priority dispatcher (25) with respect to the available transmission speed.

8. System according to Claim 7, **characterized in that** the priority dispatcher (25) assigns local data (3) to the priority memories (26) on the basis of the available transmission speed.

9. System according to one of the preceding claims, **characterized in that** the priority dispatcher (25) can be configured in order to statically or dynamically determine the requirements imposed on the transmission time.

10. System according to Claim 2, **characterized in that** local data (3) are buffered in the data buffer (24) depending on a command from the priority dispatcher (25) for the data buffer (24) .

11. Method for transmitting local data (3) relating to an industrial process (1) from at least one automation or computer unit (2, 5, 6, 7) in the installation to a computer unit (9) outside the installation by means of a data collector unit (10) in the installation, comprising the steps of:
a) collecting the local data (3) from the at least one automation or computer unit (2, 5, 6, 7) in the installation in a data buffer (24);
b) reading the local buffered data by means of a priority dispatcher (25);
c) transmitting the data stored in the priority memory of a first priority order to the computing unit outside the installation;
**characterized in that**
the priority dispatcher (25) assigns the local data (3) to different priority memories (26) depending on the requirement imposed on their transmission time or the priority dispatcher (25) prioritizes the local data (3) depending on the requirement imposed on their transmission time within the at least one priority memory (26).

12. Method according to Claim 11, **characterized in that** the data stored in the priority memories (26) of the priority order 2, 3 to x are each transmitted after dispatching the data stored in the priority memories of the priority order x-1.

13. Method according to Claim 12, **characterized in that** priority memories (26) of a lower priority order are not transmitted.

14. Method according to Claim 12, **characterized in that** the transmission of data from priority memories (26) of the priority orders x is suspended if data have been entered in the meantime in priority memories (26) of the priority orders x-1.

15. Method according to Claim 14, **characterized in that** the suspension of the transmission of data is ended if the data entered in the meantime have been transmitted.

16. Method according to Claim 11, **characterized in that** the priority dispatcher dynamically generates the priority memories.

17. Method according to Claim 11, **characterized in that** the data collector unit monitors the transmission speed of the communication connection to the computing unit outside the installation and updates the priority dispatcher with respect to the available transmission speed.

18. Method according to Claim 17, **characterized in that** the priority dispatcher enters the buffered local data in the priority memories on the basis of the available transmission speed.

## Revendications

1. Système (100) de commande et/ou d'analyse d'un processus (1) industriel, comprenant, du côté de l'installation, au moins une unité (2, 5, 6, 7) d'automatisation ou de calcul, qui effectue des premiers calculs de grandeur de processus et agit sur le processus (1), comportant, extérieurement à l'installation, une unité (9) informatique, qui effectue un certain nombre de deuxièmes calculs de grandeur de processus et qui reçoit, par l'intermédiaire d'une liaison (15) de données, des données (3) locales de la au moins une unité (2, 5, 6, 7) d'automatisation ou de calcul, **caractérisé en ce que** le système a, du côté de l'installation, au moins une unité (10) de collecte de données, l'unité (10) de collecte de données donnant priorité au transfert de données par l'intermédiaire de la liaison (15) de données entre la au moins une unité (2, 5, 6, 7) d'automatisation et de calcul et l'unité (9) informatique extérieure à l'installation, **caractérisé en ce que**
l'unité (10) de collecte de données a un dispatcheur (25) de priorité et au moins une mémoire (26) de priorité, le dispatcheur (25) de priorité associant les données (3) locales, en fonction de leur demande en temps de transmission, à des mémoires (26) de priorité différentes, ou le dispatcheur (25) de priorité donnant, au sein de la au moins une mémoire (26) de priorité, priorité aux données (3) locales en fonction de leur exigence en matière de temps de transmission.

2. Système suivant la revendication 1, **caractérisé en ce que** l'unité (10) de collecte de données a un tampon (24) de données pour la mise en mémoire intermédiaire des données (3) locales.

3. Système suivant la revendication 1 ou 2, **caractérisé en ce que** l'unité (10) de collecte de données a un module de prétraitement des données (3) locales.

4. Système suivant l'une des revendications précédentes, **caractérisé en ce que** des données dans les mémoires (26) de priorité, de moindre priorité, ne sont pas transmises.

5. Système suivant l'une des revendications précédentes, **caractérisé en ce que** le dispatcheur (25) de priorité produit des mémoires (26) de priorité d'une manière dynamique.

6. Système suivant l'une des revendications précédentes, **caractérisé en ce que** l'unité (10) de collecte de données a un module (28) de contrôle de la vitesse de transmission de la liaison de communication avec l'unité (9) informatique extérieure à l'installation.

7. Système suivant la revendication 6, **caractérisé en ce que** le module (28) de contrôle met à jour le dispatcheur (25) de priorité en ce qui concerne la vitesse de transmission disponible.

8. Système suivant la revendication 7, **caractérisé en ce que** le dispatcheur (25) de priorité effectue, sur la base de la vitesse de transmission disponible, l'association de données (3) locale aux mémoires (26) de priorité.

9. Système suivant l'une des revendications précédentes, **caractérisé en ce que** le dispatcheur (25) de priorité peut être configuré pour déterminer de manière statique ou dynamique les exigences en matière de temps de transmission.

10. Système suivant la revendication 2, **caractérisé en ce que** la mise en mémoire intermédiaire de données (3) locales dans le tampon (24) de données s'effectue en fonction d'une instruction du dispatcheur (25) de priorité au tampon (24) de données.

11. Procédé de transmission de données (3) locales d'un processus (1) industriel d'au moins une unité (2, 5, 6, 7) d'automatisation ou de calcul du côté de l'installation à une unité (9) informatique extérieure à l'installation, au moyen d'une unité (10) de collecte de données du côté de l'installation, comprenant les stades :
a) collecte des données (3) locales par la au moins une unité (2, 5, 6, 7) d'automatisation ou de calcul du côté de l'installation dans un tampon (24) de données;
b) lecture des données locales mises en tampon par un dispatcheur (25) de priorité;
c) envoi des données mises en mémoire dans la mémoire de priorité avec un premier ordre de priorité à l'unité informatique extérieure à l'installation;
**caractérisé en ce que**
le dispatcheur (25) de priorité associe les données (3) locales en fonction de leur demande en temps de transmission, à des mémoires (26) de priorité différentes ou donne, au sein de la au moins une mémoire (26) de priorité, priorité aux données (3) locales en fonction de leur exigence en matière de temps de transmission.

12. Procédé suivant la revendication 11, **caractérisé en ce que** les données mises en mémoire dans la mémoire (26) de priorité en ayant l'ordre de priorité 2, 3 à x sont envoyées respectivement après avoir effectué l'envoi des données mises en mémoire dans les mémoires de priorité ayant l'ordre de priorité x-1.

13. Procédé suivant la revendication 12, **caractérisé en ce que** des mémoires (26) de priorité d'ordre de priorité moindre ne sont pas envoyées.

14. Procédé suivant la revendication 12, **caractérisé en ce qu'**on suspend l'envoi de données des mémoires (26) de priorité des ordres X de priorité dans la mesure où des données ont été intermédiairement enregistrées dans des mémoires (26) de priorité ayant les ordres x-1 de priorité.

15. Procédé suivant la revendication 14, **caractérisé en ce qu'**on met fin à la suspension de l'envoi de données, dans la mesure où les données enregistrées intermédiairement ont été envoyées.

16. Procédé suivant la revendication 11, **caractérisé en ce que** le dispatcheur de priorité produit dynamiquement les mémoires de priorité.

17. Procédé suivant la revendication 11, **caractérisé en ce que** l'unité de collecte de données contrôle la vitesse de transmission de la liaison de communication de l'unité informatique extérieure à l'installation et met à jour le dispatcheur de priorité en ce qui concerne la vitesse de transmission disponible.

18. Procédé suivant la revendication 17, **caractérisé en ce que** le dispatcheur de priorité effectue, sur la base de la vitesse de transmission disponible, l'enregistrement des données locales mises en tampon dans les mémoires de priorité.
